# EUROPEAN PATENT APPLICATION

(11) **EP 4 528 596 A1**
(43) Date of publication of application: **26.03.2025**
(21) Application number: 23896645.1
(22) Date of filing: 23.11.2023
(51) Int. Cl.: G06N 3/09

(54) **NETWORK MODEL TRAINING METHOD, DATA PROCESSING METHOD, AND APPARATUS**

(30) Priority: 30.11.2022 CN 202211518720
(71) Applicant: BEIJING YOUZHUJU NETWORK TECHNOLOGY CO. LTD., Beijing 101299 (CN)
(72) Inventor: ZHANG, Xinsong, Beijing 100028 (CN); ZENG, Yan, Beijing 100028 (CN); LI, Hang, Beijing 100028 (CN)
(74) Representative: Williams, Michael David
(86) International application number: PCT/CN2023/133545
(87) International publication number: WO 2024/114494

(57) **Abstract**

The present disclosure provides a network model training method, a data processing method, and an apparatus. The network model training method comprises: acquiring target sample data, wherein the target sample data comprises text sample data and image sample data; inputting the target sample data into a network model to be trained to obtain a sample recognition result; and adjusting a parameter of a text encoder on the basis of a text recognition result and first supervision data corresponding to the text recognition result, adjusting a parameter of an image encoder on the basis of an image recognition result and second supervision data corresponding to the image recognition result, and a hybrid image-text recognition result and third supervision data corresponding to the hybrid image-text recognition result, and adjusting a parameter of a hybrid encoder on the basis of the hybrid image-text recognition result and the third supervision data corresponding to the hybrid image-text recognition result to obtain the trained network model formed by the text encoder, the image encoder, and the hybrid encoder.

## Description

### CROSS-REFERENCE TO RELATED APPLICATION(S)

The present application is based on and claims priority to Chinese Patent Application No. 202211518720.8, filed on November 30, 2022, the disclosure of which is incorporated herein by reference in its entirety.

### TECHNICAL FIELD

The present disclosure relates to the field of neural network technologies, and in particular, to a network model training method, a data processing method, and an apparatus.

### BACKGROUND

With the rapid development and popularization of deep learning technologies, neural networks are applied in more and more fields. Before using the neural network, a corresponding pre-trained model may be selected according to an application scenario, and the pre-trained model is trained in a targeted manner, so as to obtain a network model that can adapt to a specific application scenario. Therefore, how to train the pre-trained model to improve the training efficiency of the neural network in an application process has become a technical problem that needs to be solved in this field.

In the related art, when the pre-trained model is trained, different pre-trained models may be set for data in different modalities such as images and texts, and the pre-trained models corresponding to the different modalities are trained separately, so as to obtain the pre-trained models corresponding to the modalities separately. However, this process is relatively complex, and different pre-trained models can be obtained only after multiple times of training, which is inefficient. In addition, the data type that can be processed is limited to data in a single modality, and there is no capability of processing multi-modal data. However, if encoders corresponding to a plurality of modalities are provided in the same network model, it is difficult to train the network model including the encoders corresponding to the plurality of modalities by using a conventional training means, because optimization directions of the encoders corresponding to the different modalities are usually different, and network precision of the network model after training needs to be improved.

### SUMMARY

The embodiments of the present disclosure provide at least a network model training method, a data processing method, and an apparatus.

In a first aspect, an embodiment of the present disclosure provides a network model training method. The method includes:
obtaining target sample data, where the target sample data includes text sample data and image sample data;
inputting the target sample data into a to-be-trained network model to obtain a sample recognition result, where the network model includes a text encoder, an image encoder, and a hybrid encoder, and the sample recognition result includes a text recognition result determined based on the text encoder, an image recognition result determined based on the image encoder, and a text-image hybrid recognition result determined based on the hybrid encoder; and
adjusting a parameter of the text encoder based on the text recognition result and first supervision data corresponding to the text recognition result, adjusting a parameter of the image encoder based on the image recognition result and second supervision data corresponding to the image recognition result, the text-image hybrid recognition result, and third supervision data corresponding to the text-image hybrid recognition result, and adjusting a parameter of the hybrid encoder based on the text-image hybrid recognition result and the third supervision data corresponding to the text-image hybrid recognition result, to obtain a trained network model including the text encoder, the image encoder, and the hybrid encoder.

In a possible implementation, the text sample data includes first text sample data and second text sample data, the second text sample data is obtained by adding a mask to the first text sample data; the image sample data includes first image sample data and second image sample data, the second image sample data is obtained by adding a mask to the first image sample data; and
the inputting the target sample data into the to-be-trained network model to obtain the sample recognition result includes:
inputting the first text sample data and the second text sample data into the text encoder, respectively, to obtain a first text vector and a second text vector output by the text encoder; and inputting the first image sample data and the second image sample data into the image encoder, respectively, to obtain a first image vector and a second image vector output by the image encoder;
inputting the second text vector and the second image vector into the hybrid encoder to obtain a hybrid encoding vector; and
determining the text recognition result based on the second text vector; determining the image recognition result based on the second image vector; and determining the text-image hybrid recognition result based on the hybrid encoding vector.

In a possible implementation, first supervision data corresponding to the second text sample data is text data corresponding to a mask in the second text sample data; and
the adjusting the parameter of the text encoder based on the text recognition result and the first supervision data corresponding to the text recognition result includes:
determining a first loss value for representing accuracy of the text recognition result based on the text recognition result corresponding to the second text sample data and the first supervision data corresponding to the second text sample data; and
adjusting the parameter of the text encoder based on the first loss value.

In a possible implementation, the first text sample data is used for describing content in the first image sample data; and
the method further includes:
determining a second loss value for representing contrastive learning between the image encoder and the text encoder based on the first text vector and the first image vector; and
the adjusting the parameter of the text encoder based on the first loss value includes: adjusting the parameter of the text encoder based on the first loss value and the second loss value.

In a possible implementation, adjusting the parameter of the image encoder includes a plurality of adjustment rounds, each adjustment round includes adjusting the parameter of the image encoder by using a plurality of pieces of second image sample data and second supervision data corresponding to the plurality of pieces of second image sample data, respectively; and
for any adjustment round, the method further includes determining the second supervision data corresponding to the second image sample data in this adjustment round according to the following method:
inputting the first image sample data corresponding to the second image sample data used in this adjustment round into the image encoder before this adjustment round starts, to obtain the second supervision data corresponding to the second image sample data used in this adjustment round.

In a possible implementation, the first text sample data is used for describing content in the first image sample data; and the adjusting the parameter of the image encoder based on the image recognition result and the second supervision data corresponding to the image recognition result, the text-image hybrid recognition result, and the third supervision data corresponding to the text-image hybrid recognition result includes:
determining a third loss value for representing accuracy of the image recognition result based on the image recognition result corresponding to the second image sample data and the second supervision data;
determining a fourth loss value for representing accuracy of text-image recognition based on the text-image hybrid recognition result and the third supervision data corresponding to the text-image hybrid recognition result; and determining a fifth loss value for representing contrastive learning between the image encoder and the text encoder based on the first text vector and the first image vector; and
adjusting the parameter of the image encoder based on the third loss value, the fourth loss value, and the fifth loss value.

In a possible implementation, the method further includes:
obtaining test sample data in a target scenario; and
performing fine-tuning processing on the trained network model based on the test sample data, to obtain a target network model in the target scenario.

In a second aspect, an embodiment of the present disclosure further provides a data processing method. The method includes:
obtaining to-be-processed data, where the to-be-processed data includes at least one of text data or image data;
inputting the to-be-processed data into a trained target encoding network to obtain a target encoding result corresponding to the to-be-processed data, where the target encoding network is a network model obtained by training according to any one of the training methods in the first aspect; and
determining a data processing result corresponding to the to-be-processed data based on the target encoding result.

In a possible implementation, the method further includes determining a target encoder configured to process the to-be-processed data in the target encoding network according to the following method:
determining a target data type of the to-be-processed data; and
using an encoder matching the target data type as the target encoder.

In a third aspect, an embodiment of the present disclosure further provides a network model training apparatus.

The apparatus includes:
a first obtaining module, configured to obtain target sample data, where the target sample data includes text sample data and image sample data;
a first inputting module, configured to input the target sample data into a to-be-trained network model to obtain a sample recognition result, where the network model includes a text encoder, an image encoder, and a hybrid encoder, and the sample recognition result includes a text recognition result determined based on the text encoder, an image recognition result determined based on the image encoder, and a text-image hybrid recognition result determined based on the hybrid encoder; and
an adjusting module, configured to adjust a parameter of the text encoder based on the text recognition result and first supervision data corresponding to the text recognition result, adjust a parameter of the image encoder based on the image recognition result and second supervision data corresponding to the image recognition result, the text-image hybrid recognition result, and third supervision data corresponding to the text-image hybrid recognition result, and adjust a parameter of the hybrid encoder based on the text-image hybrid recognition result and the third supervision data corresponding to the text-image hybrid recognition result, to obtain a trained network model including the text encoder, the image encoder, and the hybrid encoder.

In a possible implementation, the text sample data includes first text sample data and second text sample data, the second text sample data is obtained by adding a mask to the first text sample data; the image sample data includes first image sample data and second image sample data, the second image sample data is obtained by adding a mask to the first image sample data; and
the first inputting module, when inputting the target sample data into the to-be-trained network model to obtain the sample recognition result, is configured to:
input the first text sample data and the second text sample data into the text encoder, respectively, to obtain a first text vector and a second text vector output by the text encoder; and input the first image sample data and the second image sample data into the image encoder, respectively, to obtain a first image vector and a second image vector output by the image encoder;
input the second text vector and the second image vector into the hybrid encoder to obtain a hybrid encoding vector; and
determine the text recognition result based on the second text vector; determine the image recognition result based on the second image vector; and determine the text-image hybrid recognition result based on the hybrid encoding vector.

In a possible implementation, first supervision data corresponding to the second text sample data is text data corresponding to a mask in the second text sample data; and
the adjusting module, when adjusting the parameter of the text encoder based on the text recognition result and the first supervision data corresponding to the text recognition result, is configured to:
determine a first loss value for representing accuracy of the text recognition result based on the text recognition result corresponding to the second text sample data and the first supervision data corresponding to the second text sample data; and
adjust the parameter of the text encoder based on the first loss value.

In a possible implementation, the first text sample data is used for describing content in the first image sample data; and
the adjusting module is further configured to:
determine a second loss value for representing contrastive learning between the image encoder and the text encoder based on the first text vector and the first image vector; and
the adjusting module, when adjusting the parameter of the text encoder based on the first loss value, is configured to:
   adjust the parameter of the text encoder based on the first loss value and the second loss value.

In a possible implementation, adjusting the parameter of the image encoder includes a plurality of adjustment rounds, each adjustment round includes adjusting the parameter of the image encoder by using a plurality of pieces of second image sample data and second supervision data corresponding to the plurality of pieces of second image sample data, respectively; and
for any adjustment round, the adjusting module is further configured to determine the second supervision data corresponding to the second image sample data in this adjustment round according to the following steps: inputting the first image sample data corresponding to the second image sample data used in this adjustment round into the image encoder before this adjustment round starts, to obtain the second supervision data corresponding to the second image sample data used in this adjustment round.

In a possible implementation, the first text sample data is used for describing content in the first image sample data; and the adjusting module, when adjusting the parameter of the image encoder based on the image recognition result and the second supervision data corresponding to the image recognition result, the text-image hybrid recognition result, and the third supervision data corresponding to the text-image hybrid recognition result, is configured to:
determine a third loss value for representing accuracy of the image recognition result based on the image recognition result corresponding to the second image sample data and the second supervision data; determine a fourth loss value for representing accuracy of text-image recognition based on the text-image hybrid recognition result and the third supervision data corresponding to the text-image hybrid recognition result; and
determine a fifth loss value for representing contrastive learning between the image encoder and the text encoder based on the first text vector and the first image vector; and
adjust the parameter of the image encoder based on the third loss value, the fourth loss value, and the fifth loss value.

In a possible implementation, the adjusting module is further configured to:
obtain test sample data in a target scenario; and
perform fine-tuning processing on the trained network model based on the test sample data, to obtain a target network model in the target scenario.

In a fourth aspect, an embodiment of the present disclosure further provides a data processing apparatus. The apparatus includes:
a second obtaining module, configured to obtain to-be-processed data, where the to-be-processed data includes text data and/or image data;
a second inputting module, configured to input the to-be-processed data into a trained target encoding network to obtain a target encoding result corresponding to the to-be-processed data, where the target encoding network is a network model obtained by training according to any one of the training methods in the first aspect; and
a determination module, configured to determine a data processing result corresponding to the to-be-processed data based on the target encoding result.

In a possible implementation, the second inputting module is further configured to determine a target encoder configured to process the to-be-processed data in the target encoding network according to the following steps:
determining a target data type of the to-be-processed data; and
using an encoder matching the target data type as the target encoder.

In a fifth aspect, an embodiment of the present disclosure further provides a computer device. The computer device includes a processor, a memory, and a bus. The memory stores a machine-readable instruction executable by the processor. When the computer device runs, the processor communicates with the memory through the bus. The machine-readable instruction, when executed by the processor, causes the processor to perform the steps in any possible implementation in the first aspect or the second aspect.

In a sixth aspect, an embodiment of the present disclosure further provides a computer-readable storage medium. The computer-readable storage medium stores a computer program. The computer program, when executed by a processor, causes the processor to perform the steps in any possible implementation in the first aspect or the second aspect.

In some embodiments, the present disclosure provides a computer program product. The computer program product, when executed by a processor, causes the processor to perform the method according to any one of the embodiments.

In order to make the above objects, features, and advantages of the present disclosure more comprehensible, the following describes some embodiments in detail with reference to the drawings.

### BRIEF DESCRIPTION OF THE DRAWINGS

In order to describe the technical solutions in the embodiments of the present disclosure more clearly, the following briefly introduces drawings required for describing the embodiments. The drawings herein are incorporated into and constitute a part of the specification, and these drawings show the embodiments consistent with the present disclosure and are used in conjunction with the specification to illustrate the technical solutions of the present disclosure. It should be understood that the following drawings only show some embodiments of the present disclosure, and therefore should not be considered as limiting the scope of the present disclosure. For those of ordinary skill in the art, other related drawings can be obtained according to these drawings without creative efforts.
FIG. 1 is a flowchart of a network model training method according to an embodiment of the present disclosure;
FIG. 2 is a schematic diagram of a network architecture of a to-be-trained network model in the network model training method according to an embodiment of the present disclosure;
FIG. 3 is a flowchart of a data processing method according to an embodiment of the present disclosure;
FIG. 4 is a schematic architectural diagram of a network model training apparatus according to an embodiment of the present disclosure;
FIG. 5 is a schematic architectural diagram of a data processing apparatus according to an embodiment of the present disclosure; and
FIG. 6 is a schematic structural diagram of a computer device according to an embodiment of the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be described hereunder clearly and comprehensively with reference to the drawings in the embodiments of the present disclosure. Apparently, the described embodiments are merely some embodiments of the present disclosure, rather than all embodiments. Generally, the components of the embodiments of the present disclosure that are described and illustrated in the drawings herein may be arranged and designed in various different configurations. Therefore, the following detailed description of the embodiments of the present disclosure provided in the drawings is not intended to limit the claimed scope of the present disclosure, but is merely representative of selected embodiments of the present disclosure. Based on the embodiments of the present disclosure, all other embodiments obtained by those of ordinary skill in the art without paying creative efforts belong to the protection scope of the present disclosure.

It should be noted that the same reference numerals and letters in the following drawings denote similar items. Therefore, once an item is defined in one drawing, the item does not need to be further defined and explained in the subsequent drawings.

The term "and/or" used herein is merely an association relationship, indicating that there may be three relationships, for example, A and/or B may indicate the following three cases: A exists alone, both A and B exist, and B exists alone. In addition, the term "at least one" used herein indicates any one of a plurality of types or any combination of at least two of a plurality of types. For example, including at least one of A, B, and C may indicate including any one or more elements selected from a set consisting of A, B, and C.

It may be understood that before the technical solutions disclosed in the embodiments of the present disclosure are used, the user should be informed of the type, the use scope, the use scenario, and the like of the personal information involved in the present disclosure in an appropriate manner and the user's authorization should be obtained in accordance with the related laws and regulations.

For example, in response to receiving an active request from the user, prompt information is sent to the user to clearly inform the user that the requested operation will require acquisition and use of the user's personal information. In this manner, the user may independently select, according to the prompt information, whether to provide the personal information to software or hardware such as an electronic device, an application, a server, or a storage medium that performs an operation of the technical solution of the present disclosure.

As an optional but non-limiting implementation, in response to receiving an active request from the user, the prompt information may be sent to the user in a pop-up window, for example, and the prompt information may be presented in the pop-up window in the form of text. In addition, the pop-up window may further include a selection control for the user to select whether to "agree" or "disagree" to provide the personal information to the electronic device.

It may be understood that the above process of notifying and acquiring the user's authorization is merely illustrative and does not constitute a limitation on the implementations of the present disclosure, and other manners that meet the related laws and regulations may also be applied to the implementations of the present disclosure.

It is found through research that to obtain a network model with the capability of processing multi-modal data, encoders corresponding to a plurality of modalities may be integrated into one network model. However, when the network model is trained, it is difficult to train the network model including the encoders corresponding to the plurality of modalities well by using a conventional training means, because optimization directions of the encoders corresponding to the different modalities are usually different, and parameter adjustment of the encoders corresponding to the modalities is usually related to each other during the training process.

Based on the above research, the present disclosure provides a network model training method and apparatus, and a data processing method and apparatus. For a text encoder with a relatively low semantic understanding capability requirement, a parameter of the text encoder may be adjusted based on a text recognition result and first supervision data corresponding to the text recognition result, without using a loss value corresponding to a hybrid encoder to perform gradient update on the text encoder. For an image encoder with a relatively high semantic understanding capability requirement, a parameter of the image encoder may be adjusted based on an image recognition result and second supervision data corresponding to the image recognition result, a text-image hybrid recognition result and third supervision data corresponding to the text-image hybrid recognition result. In this manner, the impact of network precision between the encoders due to different optimization objectives during the training process can be reduced, and the convergence speed of the network model during the training process is increased, thereby improving the training efficiency of the network model.

For ease of understanding of this embodiment, a network model training method disclosed in the embodiments of the present disclosure is first described in detail. An execution subject of the network model training method provided in this embodiment is typically a computer device with a specific computing capability. For example, the computer device includes a terminal device, a server, or another processing device. The terminal device may be a user equipment (UE), a mobile device, a user terminal, a terminal, a personal digital assistant (PDA), a handheld device, a computing device, a vehicle-mounted device, a wearable device, or the like. In some possible implementations, the network model training method may be implemented by a processor calling a computer-readable instruction stored in a memory.

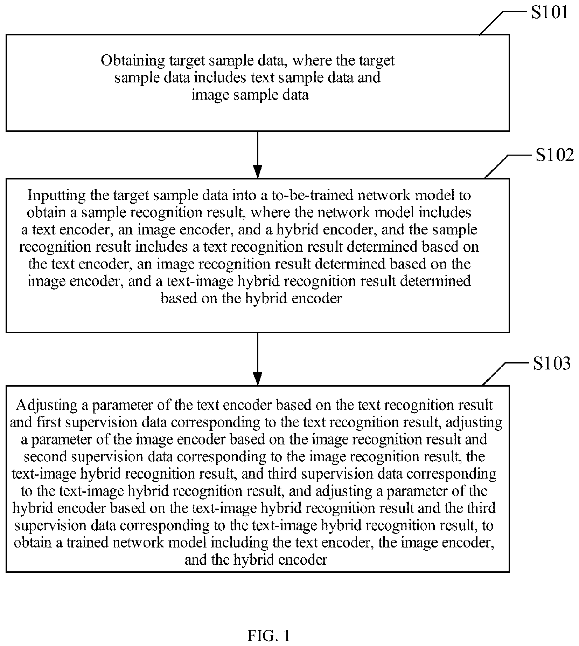

FIG. 1 is a flowchart of a network model training method according to an embodiment of the present disclosure. The method includes S101 to S103.

In S101, target sample data is obtained, where the target sample data includes text sample data and image sample data.

In S102, the target sample data is input into a to-be-trained network model to obtain a sample recognition result, where the network model includes a text encoder, an image encoder, and a hybrid encoder, and the sample recognition result includes a text recognition result determined based on the text encoder, an image recognition result determined based on the image encoder, and a text-image hybrid recognition result determined based on the hybrid encoder.

In S103, a parameter of the text encoder is adjusted based on the text recognition result and first supervision data corresponding to the text recognition result, a parameter of the image encoder is adjusted based on the image recognition result and second supervision data corresponding to the image recognition result, the text-image hybrid recognition result and third supervision data corresponding to the text-image hybrid recognition result, and a parameter of the hybrid encoder is adjusted based on the text-image hybrid recognition result and the third supervision data corresponding to the text-image hybrid recognition result, to obtain a trained network model including the text encoder, the image encoder, and the hybrid encoder.

The steps are described in detail below.

For S101,
the text sample data may include first text sample data and second text sample data, the second text sample data is obtained by adding a mask to the first text sample data; the image sample data may include first image sample data and second image sample data, the second image sample data is obtained by adding a mask to the first image sample data; and the first text sample data may be used for describing content in the first image sample data.

Specifically, the first text sample data may be text sample data in a text sample data set. The second text sample data obtained after the masking process may be obtained by performing random masking on the text in the first text sample data. A ground-truth corresponding to a mask in the masking process may be used as first supervision data corresponding to the second text sample data. The first image sample data may be image sample data in an image sample data set or an image-text paired data set, and the image-text paired data set includes the image sample data and text sample data corresponding to the image sample data. The second image sample data obtained after the masking process may be obtained by performing random masking on the first image sample data. Second supervision data corresponding to the second image sample data is described in detail below and is not described herein.

Exemplarily, if the first text sample data is "Two brown and white dogs", the second text sample data obtained after the masking process may be "Two MASK and MASK dogs" after random masking is performed on the first text sample data. In the masking process, "brown" and "white" are masked by using a mask "MASK", and a ground-truth "brown" corresponding to the first mask position and a ground-truth "white" corresponding to the second mask position may form the first supervision data corresponding to the second text sample data "Two MASK and MASK dogs".

Exemplarily, if the first image sample data is an image with a size of 900 px × 1200 px, in the process of performing random masking on the first image sample data, the first image sample data may be divided into nine image blocks with a size of 300 px × 400 px, a plurality of image blocks of the nine image blocks may be randomly selected as target image blocks, and pixel values of the target image blocks are changed in manners such as replacing the image blocks and adjusting the pixel values of the target image blocks, to implement masking on the target image blocks.

In this manner, by using the image sample data in the image-text paired data set as the first image sample data, compared with only using the image sample data in the image sample data set as the first image sample data, image data can be fully utilized, and the source of the first image sample data is enriched. The second image sample data and the second text sample data for training the network model may be obtained by performing masking on the first image sample data and the first text sample data, respectively, and the supervision data corresponding to the sample data may be obtained without manual labeling of the sample data, to implement self-supervision training.

For S102,
here, the to-be-trained network model may be a unified basic model including a plurality of encoders. The unified basic model may be obtained by integrating encoders configured to implement tasks in different modalities into one network model, to implement an effect of processing the tasks in different modalities by using one model. The tasks that can be processed by the unified basic model include a visual understanding task in an image modality, an image-text retrieval task in an image-text hybrid modality, a text understanding task in a text modality, and the like. Before specific application, the trained unified basic model may be used as a pre-trained model, and adaptive adjustment is performed by performing fine-tuning training, model architecture adjustment, and other operations according to a specific application scenario.

The text encoder may have a structure similar to a BERT model, and include 12 feature extraction layers transformers, which may be used to perform text feature extraction on input text data. The image encoder may have a structure similar to a BERT model, and include 12 feature extraction layers transformers, which may be used to perform image feature extraction on input image data. The hybrid encoder may have a structure similar to a BERT model, and include 12 feature extraction layers self-attention and 12 feature extraction layers cross-attention, which may be used to perform further data processing on the input text feature and image feature, to obtain an image-text hybrid feature.

In a possible implementation, when the target sample data is input into the to-be-trained network model to obtain the sample recognition result, the following steps A1 to A3 may be performed.

In A1, the first text sample data and the second text sample data are input into the text encoder, respectively, to obtain a first text vector and a second text vector output by the text encoder; and the first image sample data and the second image sample data are input into the image encoder, respectively, to obtain a first image vector and a second image vector output by the image encoder.

In A2, the second text vector and the second image vector are input into the hybrid encoder to obtain a hybrid encoding vector.

In A3, the text recognition result is determined based on the second text vector; the image recognition result is determined based on the second image vector; and the text-image hybrid recognition result is determined based on the hybrid encoding vector.

Here, the second text vector may be input into a text training model, to obtain a text recognition result output by the text training model. For example, the text training model may be a Masking Language Model (MLM). The second image vector may be input into an image training model, to obtain an image recognition result output by the image training model. For example, the image training model may be a Masking Image Model (MIM). The hybrid encoding vector may be input into a hybrid training model, to obtain the text-image hybrid recognition result. The hybrid training model may include an image-text matching model, a detection box prediction model, and the like. The text-image hybrid recognition result may include a determination result of whether an image and a text output by the image-text matching model match, and an image region corresponding to text content output by the detection box prediction model, for example, a detection box region corresponding to the text "dog" in the image.

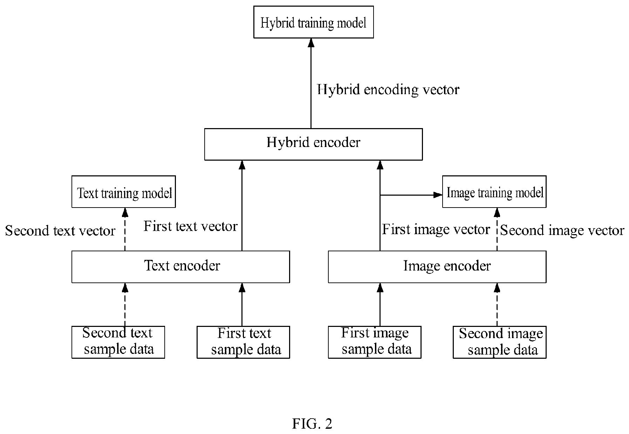

Exemplarily, a network architecture of the to-be-trained network model may be shown in FIG. 2. In FIG. 2, the network model includes the text encoder and the corresponding text training model, the image encoder and the corresponding image training model, and the hybrid encoder and the corresponding hybrid training model. An arrow direction is a forward propagation direction of the network model in a data processing process. An arrow with a solid line indicates that transmitted data is data irrelevant to mask data, and an arrow with a dotted line indicates that transmitted data is data relevant to mask data. The first text sample data is input into the text encoder and then the first text vector is output by the text encoder; the second text sample data is input into the text encoder and then the second text vector is output by the text encoder. The first image sample data is input into the image encoder and then the first image vector is output by the image encoder; the second image sample data is input into the image encoder and then the second image vector is output by the image encoder. The first text vector and the first image vector are input into the hybrid encoder and then the hybrid encoding vector is output by the hybrid encoder.

For S103,
here, the process of adjusting the parameters of the text encoder, the image encoder, and the encoder may be performed simultaneously, and after the loss values corresponding to the encoders are determined, the parameters of the encoders may be adjusted according to a topology order of backpropagation.

The parameter adjustment process for the text encoder, the image encoder, and the hybrid encoder is separately described below.

### 1. Text encoder

Here, in the process of adjusting the parameter of the text encoder, the following steps B1 and B2 may be performed.

In B1, a first loss value for representing accuracy of a text recognition result is determined based on the text recognition result corresponding to the second text sample data and the first supervision data corresponding to the second text sample data.

Here, the first supervision data corresponding to the second text sample data may be the text data corresponding to the mask in the second text sample data, that is, the ground-truth corresponding to the mask.

Specifically, the text training model may determine the text recognition result based on the input second text vector, and determine the first loss value based on the text recognition result, the first supervision data, and a first loss function. For example, the first loss function may be a cross entropy loss function.

In B2, the parameter of the text encoder is adjusted based on the first loss value.

Here, gradient update may be performed on the network parameter in the text encoder based on the first loss value, and training is continued based on the updated network parameter, until the number of parameter adjustments reaches a preset number of times, and/or the network precision of the text encoder reaches a preset precision requirement.

Further, a second loss value for representing contrastive learning (ITC) between the image encoder and the text encoder may be determined based on the first text vector and the first image vector, and the parameter of the text encoder is adjusted based on the first loss value and the second loss value.

Specifically, in the process of contrastive learning, the second loss value may be determined based on the similarity between the text recognition result output by the text encoder and the image recognition result output by the image encoder, and the parameter of the text encoder is adjusted based on the first loss value and the second loss value, until the number of parameter adjustments reaches a preset number of times, and/or the network precision of the text encoder reaches a preset precision requirement.

When the parameter of the text encoder is adjusted based on the first loss value and the second loss value, weighted summation may be performed on the first loss value and the second loss value according to a preset weight value, and the network parameter of the text encoder is adjusted based on a loss value obtained by the weighted summation.

In addition, according to the network parameter update order of backpropagation in the adjustment process of the network model, the loss value corresponding to the hybrid encoder may be used to adjust not only the network parameter of the hybrid encoder, but also the network parameters of the text encoder and the image encoder before the hybrid encoder. However, because the parameter adjustment of a plurality of encoders is involved in the training process, and optimization directions of different encoders are different, adjusting the network parameter of the text encoder based on the loss value corresponding to the hybrid encoder may not improve the network precision of the text encoder. Therefore, when the gradient update is performed based on the loss value corresponding to the hybrid encoder, the gradient update may not be performed on each network parameter in the text encoder.

In this manner, by training the text encoder based on the first loss value corresponding to the text training model that represents the accuracy of the text recognition result and the second loss value obtained in the contrastive learning process that represents the similarity between the text recognition result and the image recognition result, the network precision of the text encoder can be improved. On the other hand, by canceling the gradient update of the text encoder based on the loss value corresponding to the hybrid encoder, the impact of network precision between the encoders in the training process can be reduced, and the convergence speed of the loss function of the network model in the training process is increased, thereby improving the training efficiency of the network model.

### 2. Image encoder

Here, adjusting the parameter of the image encoder includes a plurality of adjustment rounds, and each adjustment round includes adjusting the parameter of the image encoder by using a plurality of pieces of second image sample data and second supervision data corresponding to the plurality of pieces of second image sample data, respectively.

For any adjustment round, the first image sample data corresponding to the second image sample data used in this adjustment round may be input into the image encoder before this adjustment round starts, to obtain the second supervision data corresponding to the second image sample data used in this adjustment round.

Specifically, in the process of adjusting the parameter of the image encoder, the following steps C1 and C2 may be performed.

In C1, a third loss value for representing accuracy of an image recognition result is determined based on the image recognition result corresponding to the second image sample data and the second supervision data; a fourth loss value for representing accuracy of text-image recognition is determined based on the text-image hybrid recognition result and third supervision data corresponding to the text-image hybrid recognition result; and a fifth loss value for representing contrastive learning between the image encoder and the text encoder is determined based on the first text vector and the first image vector.

Here, the third loss value may be, for example, an L2 loss or the like, which is used for representing a type of the image recognition result and a type of the second supervision data. The fourth loss value is described below and is not described herein. The fifth loss value may be the same as the second loss value.

In C2, the parameter of the image encoder is adjusted based on the third loss value, the fourth loss value, and the fifth loss value.

Here, when the parameter of the image encoder is adjusted based on the third loss value, the fourth loss value, and the fifth loss value, weighted summation is performed on the third loss value, the fourth loss value, and the fifth loss value according to preset weight values, and the parameter of the image encoder is adjusted based on a loss value obtained after the weighted summation, until the number of parameter adjustments reaches a preset number of times, and/or the network precision of the text encoder reaches a preset precision requirement. In addition, the first image vector is used as the second supervision data corresponding to the second image sample data and the first image vector is obtained by inputting the first image sample data corresponding to the second image sample data into the image encoder. The first image vector, as the second supervision data is updated according to the gradient update order in the parameter adjustment process. However, the supervision data in an adjustment round cannot change. Therefore, in an adjustment round, after the first image vector that is used as the second supervision data is determined, the gradient update may not be performed on the first image vector that is used as the second supervision data, to ensure that the supervision data in the adjustment round does not change, thereby avoiding an abnormal problem such as pattern collapse that makes it difficult to complete the training due to real-time changes of the supervision data with the parameter adjustment process. It should be noted that the gradient update of the first image vector that is used as the second supervision data in one adjustment round is paused, but the gradient update is normally performed on the first image vector that is input into the hybrid encoder, to ensure normal training of the hybrid encoder.

In this manner, the first image vector is obtained by feature extraction performed on the image encoder after the contrastive learning and is used as the supervision data when the image training model determines the third loss value. Therefore the image encoder can further obtain a gain brought by image-text cross-modal data in the contrastive learning manner in the parameter adjustment process of the image encoder, thereby improving the multi-modal understanding capability of the network model.

In addition, in the related art, a solution such as contrastive learning is not used to bring an image-text cross-modal gain to the first image vector that is used as the supervision data, but only an image vector related to an image is used as the supervision data. However, because the first image vector that is used as the supervision data includes the image-text cross-modal gain, and has richer semantics, using the first image vector obtained by feature extraction performed on the image encoder after the contrastive learning as the supervision data when the image training model determines the third loss value can further improve the image understanding capability of the network model.

### 3. Hybrid encoder

Here, in the process of adjusting the parameter of the hybrid encoder, the hybrid encoding vector may be input into the hybrid training model, to obtain the text-image hybrid recognition result output by the hybrid training model. A fourth loss value is determined based on the text-image hybrid recognition result and third supervision data corresponding to the text-image hybrid recognition result, and the network parameter of the hybrid encoder is adjusted based on the fourth loss value, until the number of parameter adjustments reaches a preset number of times, and/or the network precision of the hybrid encoder reaches a preset precision requirement. The type of the fourth loss value matches the type of the hybrid training model.

Exemplarily, if the hybrid training model is a detection box prediction model, the third supervision data may be a manually labeled detection box in an image, and the fourth loss value may be an Intersection over Union (IoU) loss, so that according to the fourth loss value, the cross-modal understanding capability of the network model to find a corresponding position region in the image according to the text content can be improved.

In this manner, the network precision of the hybrid encoder can be improved by adjusting the parameter of the hybrid encoder by using the hybrid training model, and the cross-modal understanding capability of the network model can be improved. On the other hand, the cross-modal understanding capability of the network model can be further improved by combining the process of contrastive learning with the parameter adjustment process of the image encoder.

In addition, the hybrid training model may further include a Masking Language Model (MLM). When the masking language model is used as the hybrid training model for training the hybrid encoder, the masking language model MLM may be used to determine text content corresponding to an image based on image content and text content in the image. When the gradient update is performed based on the loss value corresponding to the hybrid encoder, the gradient update is not performed on each network parameter in the text encoder, so that the first text vector input into the hybrid encoder is not subjected to gradient update. Therefore, in the process of training the hybrid encoder by using the hybrid training model, more attention is paid to the image content, while the text content corresponding to the text vector that is not updated is ignored, so that the image understanding capability of the network model can be further improved.

In a possible implementation, the method further includes obtaining a target network model according to the following steps D1 and D2.

In D1, test sample data in a target scenario is obtained.

In D2, fine-tuning processing is performed on the trained network model based on the test sample data, to obtain a target network model in the target scenario.

In this manner, after the image encoder, the text encoder, and the hybrid encoder in the network model are adjusted by using the above method, the obtained network model may be used as a pre-trained model, and the network model, as the pre-trained model, is fine-tuned based on the test sample data corresponding to a target scenario for specific application, so that a target network model that can be applied in the target scenario can be obtained.

In an actual application process, due to different application scenarios, it is possible that only image data needs to be processed or only text data needs to be processed in some application scenarios. In this case, if a network model including encoders corresponding to a plurality of modalities is deployed, resource waste and other problems may be caused.

Therefore, the architecture of the trained network model may be adjusted according to a target requirement type corresponding to a target application scenario, and after the architecture of the network model is adjusted, the network model is fine-tuned based on the test sample data, to obtain the target network model. Exemplarily, if the target requirement type corresponding to the target scenario is text processing, the text encoder in the trained network model may be selected and used as an encoder of the target network model, and the selected encoder and a decoder corresponding to the target scenario are combined to obtain a to-be-trained model. The test sample data is used to train the to-be-trained model, to obtain the target network model.

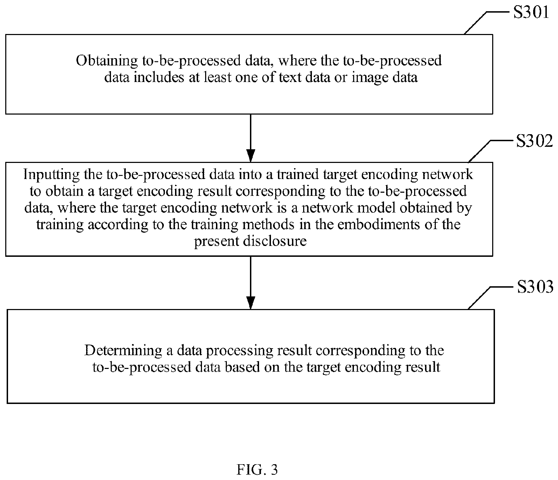

FIG. 3 is a flowchart of a data processing method according to an embodiment of the present disclosure. The method includes S301 to S303.

In S301, to-be-processed data is obtained, where the to-be-processed data includes at least one of text data or image data.

Here, the to-be-processed data may include one of the following: image data corresponding to a visual understanding task, text data corresponding to a text understanding task, text data and image data corresponding to a visual question answering task, text data and image data corresponding to a visual reasoning task, and text data and image data corresponding to an image-text retrieval task.

Each type of task may correspond to a specific application scenario. The application scenarios are separately described below.

### 1. Visual understanding task

Here, the visual understanding task may be used to examine the capability of a network model to understand image content, and may be applied to various scenarios such as an image content understanding scenario and an object labeling scenario in an image. The visual understanding capability of the model is required in various application scenarios.

### 2. Text understanding task

Here, the text understanding task may be used to examine the capability of a network model to understand text content, and may be applied to various scenarios such as text content recognition and determining key text content. The text understanding capability of the model is required in various application scenarios.

### 3. Visual question answering task

Here, the visual question answering task is used to examine the capability of a model to answer a question according to an image, and may be applied to various scenarios such as automatic answering and automatic paper grading.

### 4. Visual reasoning task

Here, the visual reasoning task may be used to examine whether the network model can accurately determine whether text content can correctly describe an image, and the network model may be applied to various scenarios such as automatic answering and automatic paper grading.

### 5. Image-text retrieval task

Here, the image-text retrieval task may be used to examine the capability of the model to retrieve a related image through a text and retrieve a related text through an image, and the model may be applied to various search scenarios such as image search and image-text search.

In this manner, by obtaining the to-be-processed data corresponding to different tasks, the network model for performing the corresponding tasks can be obtained through the subsequent steps, so that the network model used in each application scenario can be quickly trained, and the utilization efficiency and training speed of the network model in the above application scenarios are improved.

In S302, the to-be-processed data is input into a trained target encoding network to obtain a target encoding result corresponding to the to-be-processed data, where the target encoding network is a network model trained according to the training method in the embodiment of the present disclosure.

In S303, a data processing result corresponding to the to-be-processed data is determined based on the target encoding result.

In a possible implementation, a target data type of the to-be-processed data may be determined, and an encoder matching the target data type may be used as a target encoder configured to process the to-be-processed data. Exemplarily, if the target data type of the to-be-processed data is text data, the text encoder may be selected and used as the target encoder configured to process the to-be-processed data, and the to-be-processed data is processed based on the target encoder, to obtain the target encoding result.

Further, after the target encoding result is obtained, the target encoding result may be processed according to a target decoder matching the target data type, to obtain the data processing result.

In this manner, data in a plurality of different modalities can be processed by using one target encoding network. Compared with separately using different network models to separately process data in corresponding modalities, the utilization efficiency of the network model can be improved.

According to the network model training method provided in the embodiments of the present disclosure, for the text encoder with a relatively low semantic understanding capability requirement, the parameter of the text encoder may be adjusted based on the text recognition result and the first supervision data corresponding to the text recognition result, without using the loss value corresponding to the hybrid encoder to perform the gradient update on the text encoder. For the image encoder with a relatively high semantic understanding capability requirement, the parameter of the image encoder may be adjusted based on the image recognition result and the second supervision data corresponding to the image recognition result, the text-image hybrid recognition result and the third supervision data corresponding to the text-image hybrid recognition result. In this manner, the impact of network precision between the encoders due to different optimization objectives in the training process can be reduced, and the convergence speed of the network model in the training process is increased, thereby improving the training efficiency of the network model.

It may be understood by those of ordinary skill in the art that in the foregoing method in the specific implementation, the writing sequence of each step does not mean a strict execution sequence and does not constitute any limitation on the implementation process, and the specific execution sequence of each step should be determined based on its function and possible internal logic.

Based on the same inventive concept, the embodiments of the present disclosure further provide a network model training apparatus corresponding to the network model training method. Because the principle for solving problems in the apparatus in the embodiments of the present disclosure is similar to the network model training method described above in the embodiments of the present disclosure, for the implementation of the apparatus, refer to the implementation of the method, and details are not described herein again.

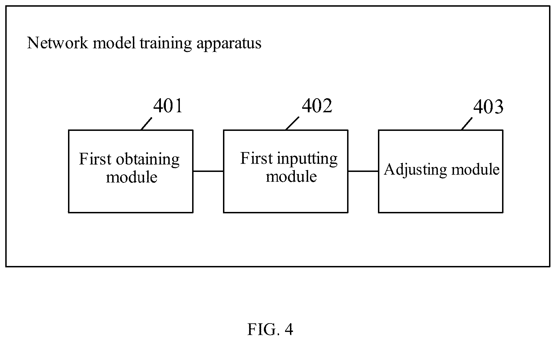

FIG. 4 is a schematic architectural diagram of a network model training apparatus according to an embodiment of the present disclosure. The apparatus includes a first obtaining module 401, a first inputting module 402, and an adjusting module 403.

The first obtaining module 401 is configured to obtain target sample data, where the target sample data includes text sample data and image sample data.

The first inputting module 402 is configured to input the target sample data into a to-be-trained network model to obtain a sample recognition result, where the network model includes a text encoder, an image encoder, and a hybrid encoder, and the sample recognition result includes a text recognition result determined based on the text encoder, an image recognition result determined based on the image encoder, and a text-image hybrid recognition result determined based on the hybrid encoder.

The adjusting module 403 is configured to adjust a parameter of the text encoder based on the text recognition result and first supervision data corresponding to the text recognition result, adjust a parameter of the image encoder based on the image recognition result and second supervision data corresponding to the image recognition result, the text-image hybrid recognition result, and third supervision data corresponding to the text-image hybrid recognition result, and adjust a parameter of the hybrid encoder based on the text-image hybrid recognition result and the third supervision data corresponding to the text-image hybrid recognition result, to obtain a trained network model including the text encoder, the image encoder, and the hybrid encoder. In a possible implementation, the text sample data includes first text sample data and second text sample data, the second text sample data is obtained by adding a mask to the first text sample data; the image sample data includes first image sample data and second image sample data, the second image sample data is obtained by adding a mask to the first image sample data; and
the first inputting module 402, when inputting the target sample data into the to-be-trained network model to obtain the sample recognition result, is configured to:
input the first text sample data and the second text sample data into the text encoder, respectively, to obtain a first text vector and a second text vector output by the text encoder; and input the first image sample data and the second image sample data into the image encoder, respectively, to obtain a first image vector and a second image vector output by the image encoder;
input the second text vector and the second image vector into the hybrid encoder to obtain a hybrid encoding vector; and
determine the text recognition result based on the second text vector; determine the image recognition result based on the second image vector; and determine the text-image hybrid recognition result based on the hybrid encoding vector.

In a possible implementation, first supervision data corresponding to the second text sample data is text data corresponding to a mask in the second text sample data; and
the adjusting module 403, when adjusting the parameter of the text encoder based on the text recognition result and the first supervision data corresponding to the text recognition result, is configured to:
determine a first loss value for representing accuracy of the text recognition result based on the text recognition result corresponding to the second text sample data and the first supervision data corresponding to the second text sample data; and
adjust the parameter of the text encoder based on the first loss value.

In a possible implementation, the first text sample data is used for describing content in the first image sample data; and
the adjusting module 403 is further configured to:
determine a second loss value for representing contrastive learning between the image encoder and the text encoder based on the first text vector and the first image vector; and
the adjusting module 403, when adjusting the parameter of the text encoder based on the first loss value, is configured to:
   adjust the parameter of the text encoder based on the first loss value and the second loss value.

In a possible implementation, adjusting the parameter of the image encoder includes a plurality of adjustment rounds, each adjustment round includes adjusting the parameter of the image encoder by using a plurality of pieces of second image sample data and second supervision data corresponding to the plurality of pieces of second image sample data, respectively; and
for any adjustment round, the adjusting module 403 is further configured to determine the second supervision data corresponding to the second image sample data in this adjustment round according to the following steps: inputting the first image sample data corresponding to the second image sample data used in this adjustment round into the image encoder before this adjustment round starts, to obtain the second supervision data corresponding to the second image sample data used in this adjustment round.

In a possible implementation, the first text sample data is used for describing content in the first image sample data; and the adjusting module 403, when adjusting the parameter of the image encoder based on the image recognition result and the second supervision data corresponding to the image recognition result, the text-image hybrid recognition result and the third supervision data corresponding to the text-image hybrid recognition result, is configured to:
determine a third loss value for representing accuracy of the image recognition result based on the image recognition result corresponding to the second image sample data and the second supervision data; determine a fourth loss value for representing accuracy of text-image recognition based on the text-image hybrid recognition result and the third supervision data corresponding to the text-image hybrid recognition result; and
determine a fifth loss value for representing contrastive learning between the image encoder and the text encoder based on the first text vector and the first image vector; and
adjust the parameter of the image encoder based on the third loss value, the fourth loss value, and the fifth loss value.

In a possible implementation, the adjusting module 403 is further configured to:
obtain test sample data in a target scenario; and
perform fine-tuning processing on the trained network model based on the test sample data, to obtain a target network model in the target scenario.

According to the network model training apparatus provided in the embodiments of the present disclosure, for the text encoder with a relatively low semantic understanding capability requirement, the parameter of the text encoder may be adjusted based on the text recognition result and the first supervision data corresponding to the text recognition result, without using the loss value corresponding to the hybrid encoder to perform the gradient update on the text encoder. For the image encoder with a relatively high semantic understanding capability requirement, the parameter of the image encoder may be adjusted based on the image recognition result and the second supervision data corresponding to the image recognition result, the text-image hybrid recognition result and the third supervision data corresponding to the text-image hybrid recognition result. In this manner, the impact of network precision between the encoders due to different optimization objectives in the training process can be reduced, and the convergence speed of the network model in the training process is increased, thereby improving the training efficiency of the network model.

For the processing flow of each module in the apparatus and the interaction flow between the modules, the related description in the foregoing method embodiments can be refered to. Details are not described herein again.

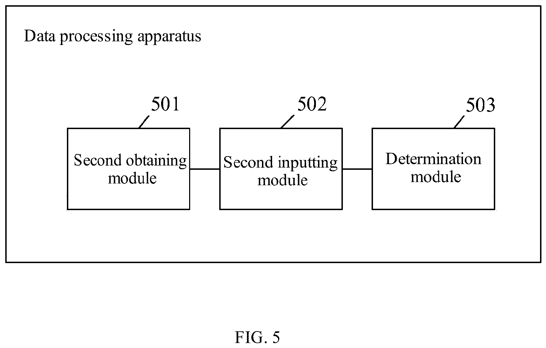

FIG. 5 is a schematic architectural diagram of a data processing apparatus according to an embodiment of the present disclosure. The apparatus includes a second obtaining module 501, a second inputting module 502, and a determination module 503.

The second obtaining module 501 is configured to obtain to-be-processed data, where the to-be-processed data includes at least one of text data or image data.

The second inputting module 502 is configured to input the to-be-processed data into a trained target encoding network to obtain a target encoding result corresponding to the to-be-processed data, where the target encoding network is a network model trained according to any one of the training methods in the embodiments of the present disclosure.

The determination module 503 is configured to determine a data processing result corresponding to the to-be-processed data based on the target encoding result.

In a possible implementation, the second inputting module 502 is further configured to determine a target encoder configured to process the to-be-processed data in the target encoding network according to the following steps:
determining a target data type of the to-be-processed data; and
using an encoder matching the target data type as the target encoder.

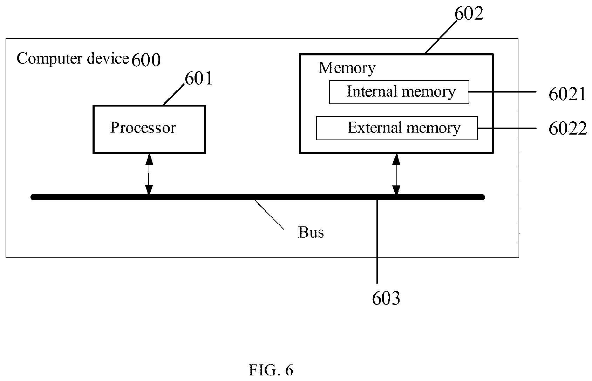

Based on the same technical concept, an embodiment of the present disclosure further provides a computer device. FIG. 6 is a schematic structural diagram of a computer device 600 according to an embodiment of the present disclosure. The computer device 600 includes a processor 601, a memory 602, and a bus 603. The memory 602 is configured to store an execution instruction, and includes an internal memory 6021 and an external memory 6022. The internal memory 6021, also referred to as an internal memory, is configured to temporarily store operation data in the processor 601 and data exchanged with the external memory 6022 such as a hard disk. The processor 601 exchanges data with the external memory 6022 through the internal memory 6021. When the computer device 600 runs, the processor 601 communicates with the memory 602 through the bus 603, so that the processor 601 executes the following instructions:
obtaining target sample data, where the target sample data includes text sample data and image sample data;
inputting the target sample data into a to-be-trained network model to obtain a sample recognition result, where the network model includes a text encoder, an image encoder, and a hybrid encoder, and the sample recognition result includes a text recognition result determined based on the text encoder, an image recognition result determined based on the image encoder, and a text-image hybrid recognition result determined based on the hybrid encoder; and
adjusting a parameter of the text encoder based on the text recognition result and first supervision data corresponding to the text recognition result, adjusting a parameter of the image encoder based on the image recognition result and second supervision data corresponding to the image recognition result, the text-image hybrid recognition result and third supervision data corresponding to the text-image hybrid recognition result, and adjusting a parameter of the hybrid encoder based on the text-image hybrid recognition result and the third supervision data corresponding to the text-image hybrid recognition result, to obtain a trained network model including the text encoder, the image encoder, and the hybrid encoder.

In a possible implementation, in the instruction of the processor 601, the text sample data includes first text sample data and second text sample data, the second text sample data is obtained by adding a mask to the first text sample data; the image sample data includes first image sample data and second image sample data, the second image sample data is obtained by adding a mask to the first image sample data; and
the inputting the target sample data into the to-be-trained network model to obtain the sample recognition result includes:
inputting the first text sample data and the second text sample data into the text encoder, respectively, to obtain a first text vector and a second text vector output by the text encoder; and inputting the first image sample data and the second image sample data into the image encoder, respectively, to obtain a first image vector and a second image vector output by the image encoder;
inputting the second text vector and the second image vector into the hybrid encoder to obtain a hybrid encoding vector; and
determining the text recognition result based on the second text vector; determining the image recognition result based on the second image vector; and determining the text-image hybrid recognition result based on the hybrid encoding vector.

In a possible implementation, in the instruction of the processor 601, first supervision data corresponding to the second text sample data is text data corresponding to a mask in the second text sample data; and
the adjusting the parameter of the text encoder based on the text recognition result and the first supervision data corresponding to the text recognition result includes:
determining a first loss value for representing accuracy of the text recognition result based on the text recognition result corresponding to the second text sample data and the first supervision data corresponding to the second text sample data; and
adjusting the parameter of the text encoder based on the first loss value.

In a possible implementation, in the instruction of the processor 601, the first text sample data is used for describing content in the first image sample data; and
the method further includes:
determining a second loss value for representing contrastive learning between the image encoder and the text encoder based on the first text vector and the first image vector; and
the adjusting the parameter of the text encoder based on the first loss value includes:
   adjusting the parameter of the text encoder based on the first loss value and the second loss value.

In a possible implementation, in the instruction of the processor 601, adjusting the parameter of the image encoder includes a plurality of adjustment rounds, each adjustment round includes adjusting the parameter of the image encoder by using a plurality of pieces of second image sample data and second supervision data corresponding to the plurality of pieces of second image sample data, respectively; and
for any adjustment round, the method further includes determining the second supervision data corresponding to the second image sample data in this adjustment round according to the following method:
inputting the first image sample data corresponding to the second image sample data used in this adjustment round into the image encoder before this adjustment round starts, to obtain the second supervision data corresponding to the second image sample data used in this adjustment round.

In a possible implementation, in the instruction of the processor 601, the first text sample data is used for describing content in the first image sample data; and the adjusting the parameter of the image encoder based on the image recognition result and the second supervision data corresponding to the image recognition result, the text-image hybrid recognition result, and the third supervision data corresponding to the text-image hybrid recognition result includes:
determining a third loss value for representing accuracy of the image recognition result based on the image recognition result corresponding to the second image sample data and the second supervision data;
determining a fourth loss value for representing accuracy of text-image recognition based on the text-image hybrid recognition result and the third supervision data corresponding to the text-image hybrid recognition result; and determining a fifth loss value for representing contrastive learning between the image encoder and the text encoder based on the first text vector and the first image vector; and
adjusting the parameter of the image encoder based on the third loss value, the fourth loss value, and the fifth loss value.

In a possible implementation, the instruction of the processor 601 further includes:
obtaining test sample data in a target scenario; and
performing fine-tuning processing on the trained network model based on the test sample data, to obtain a target network model in the target scenario;
or causes the processor 601 to execute the following instructions:
   obtaining to-be-processed data, where the to-be-processed data includes at least one of text data or image data;
   inputting the to-be-processed data into a trained target encoding network to obtain a target encoding result corresponding to the to-be-processed data, where the target encoding network is a network model trained according to any one of the training methods in the first aspect; and
   determining a data processing result corresponding to the to-be-processed data based on the target encoding result.

In a possible implementation, the instruction of the processor 601 further includes determining a target encoder configured to process the to-be-processed data in the target encoding network according to the following method:
determining a target data type of the to-be-processed data; and
using an encoder matching the target data type as the target encoder.

The embodiments of the present disclosure further provide a computer-readable storage medium. The computer-readable storage medium stores a computer program thereon. The computer program, when executed by a processor, causes the processor to perform the steps of the network model training method described in the foregoing method embodiments. The storage medium may be a volatile or non-volatile computer-readable storage medium.

The embodiments of the present disclosure further provide a computer program product. The computer program product carries program code, and instructions included in the program code may be used to perform the steps of the network model training method described in the foregoing method embodiments. For details, refer to the foregoing method embodiments. Details are not described herein again.

The computer program product may be specifically implemented by using hardware, software, or a combination thereof. In an optional embodiment, the computer program product is specifically implemented as a computer storage medium. In another optional embodiment, the computer program product is specifically implemented as a software product, for example, a software development kit (SDK) or the like.

It may be clearly understood by those of ordinary skill in the art that for the convenience and brevity of description, for the specific working process of the foregoing system and apparatus, reference may be made to the corresponding process in the foregoing method embodiments, and details are not described herein again. In the several embodiments provided in the present disclosure, it should be understood that the disclosed system, apparatus, and method may be implemented in other manners. The apparatus embodiments described above are merely illustrative. For example, the division of units is merely a logical function division, and in actual implementation, there may be other division manners. For another example, a plurality of units or components may be combined or integrated into another system, or some features may be ignored or not performed. In addition, the mutual coupling or direct coupling or communication connection shown or discussed may be indirect coupling or communication connection through some communication interfaces, apparatuses, or units, and may be in electrical, mechanical, or other forms.

The units described as separate parts may be or may not be physically separate, and the parts displayed as units may be or may not be physical units, that is, may be located in one place or distributed to a plurality of network units. Some or all of the units may be selected according to actual needs to implement the objectives of the solutions in the embodiments.

In addition, the functional units in the embodiments of the present disclosure may be integrated in one processing unit, may exist separately physically, or may be integrated into one unit.

If the functions are implemented in the form of a software function unit and sold or used as an independent product, the functions may be stored in a computer-readable storage medium that is non-volatile and executable by a processor. Based on such understanding, the substantial part or part making contributions relative to the related technology in the technical solutions of the present disclosure or part of the technical solution may be embodied in the form of a software product, and the computer software product is stored in a storage medium, including a plurality of instructions for causing a computer device (which may be a personal computer, a server, or a network device) to perform all or some of the steps of the methods in the embodiments of the present disclosure. The storage medium includes various media that can store program codes, such as a universal serial bus (USB) flash drive, a mobile hard disk, a read-only memory (ROM), a random access memory (RAM), a magnetic disk, or an optical disk.

Finally, it should be noted that the foregoing embodiments are merely specific implementations of the present disclosure, which are used to illustrate the technical solutions of the present disclosure, but not to limit the technical solutions. The protection scope of the present disclosure is not limited to the disclosed embodiments. Although the present disclosure has been described in detail with reference to the foregoing embodiments, those of ordinary skill in the art should understand that any person skilled in the art can make modifications or changes to the technical solutions described in the foregoing embodiments or make equivalent replacements to some technical features thereof within the technical scope disclosed by the present disclosure; and these modifications, changes, or replacements do not make the essence of the corresponding technical solutions deviate from the spirit and scope of the technical solutions of the embodiments of the present disclosure, and all of them are encompassed in the protection scope of the present disclosure. Therefore, the protection scope of the present disclosure should be subject to the protection scope of the claims.

## Claims

1. A network model training method, comprising:
obtaining target sample data, wherein the target sample data comprises text sample data and image sample data;
inputting the target sample data into a to-be-trained network model to obtain a sample recognition result, wherein the network model comprises a text encoder, an image encoder, and a hybrid encoder, and the sample recognition result comprises a text recognition result determined based on the text encoder, an image recognition result determined based on the image encoder, and a text-image hybrid recognition result determined based on the hybrid encoder; and
adjusting a parameter of the text encoder based on the text recognition result and first supervision data corresponding to the text recognition result, adjusting a parameter of the image encoder based on the image recognition result and second supervision data corresponding to the image recognition result, the text-image hybrid recognition result, and third supervision data corresponding to the text-image hybrid recognition result, and adjusting a parameter of the hybrid encoder based on the text-image hybrid recognition result and the third supervision data corresponding to the text-image hybrid recognition result, to obtain a trained network model comprising the text encoder, the image encoder, and the hybrid encoder.

2. The method according to claim 1, wherein the text sample data comprises first text sample data and second text sample data, the second text sample data is obtained by adding a mask to the first text sample data; the image sample data comprises first image sample data and second image sample data, the second image sample data is obtained by adding a mask to the first image sample data; and
the inputting the target sample data into the to-be-trained network model to obtain the sample recognition result comprises:
inputting the first text sample data and the second text sample data into the text encoder, respectively, to obtain a first text vector and a second text vector output by the text encoder; and inputting the first image sample data and the second image sample data into the image encoder, respectively, to obtain a first image vector and a second image vector output by the image encoder;
inputting the second text vector and the second image vector into the hybrid encoder to obtain a hybrid encoding vector; and
determining the text recognition result based on the second text vector; determining the image recognition result based on the second image vector; and determining the text-image hybrid recognition result based on the hybrid encoding vector.

3. The method according to claim 2, wherein first supervision data corresponding to the second text sample data is text data corresponding to a mask in the second text sample data; and
the adjusting the parameter of the text encoder based on the text recognition result and the first supervision data corresponding to the text recognition result comprises:
determining a first loss value for representing accuracy of the text recognition result based on the text recognition result corresponding to the second text sample data and the first supervision data corresponding to the second text sample data; and
adjusting the parameter of the text encoder based on the first loss value.

4. The method according to claim 3, wherein the first text sample data is used for describing content in the first image sample data; and
the method further comprises:
determining a second loss value for representing contrastive learning between the image encoder and the text encoder based on the first text vector and the first image vector; and
the adjusting the parameter of the text encoder based on the first loss value comprises:
adjusting the parameter of the text encoder based on the first loss value and the second loss value.

5. The method according to claim 2, wherein adjusting the parameter of the image encoder comprises a plurality of adjustment rounds, each adjustment round comprises adjusting the parameter of the image encoder by using a plurality of pieces of second image sample data and second supervision data respectively corresponding to the plurality of pieces of second image sample data; and
for any adjustment round, the method further comprises determining the second supervision data corresponding to the second image sample data in this adjustment round according to the following method: inputting the first image sample data corresponding to the second image sample data used in this adjustment round into the image encoder before this adjustment round starts, to obtain the second supervision data corresponding to the second image sample data used in this adjustment round.

6. The method according to claim 2 or 5, wherein the first text sample data is used for describing content in the first image sample data; and the adjusting the parameter of the image encoder based on the image recognition result and the second supervision data corresponding to the image recognition result, the text-image hybrid recognition result, and the third supervision data corresponding to the text-image hybrid recognition result comprises:
determining a third loss value for representing accuracy of the image recognition result based on the image recognition result corresponding to the second image sample data and the second supervision data;
determining a fourth loss value for representing accuracy of text-image recognition based on the text-image hybrid recognition result and the third supervision data corresponding to the text-image hybrid recognition result; and determining a fifth loss value for representing contrastive learning between the image encoder and the text encoder based on the first text vector and the first image vector; and
adjusting the parameter of the image encoder based on the third loss value, the fourth loss value, and the fifth loss value.

7. The method according to claim 1, further comprising:
obtaining test sample data in a target scenario; and
performing fine-tuning processing on the trained network model based on the test sample data, to obtain a target network model in the target scenario.

8. A data processing method, comprising:
obtaining to-be-processed data, wherein the to-be-processed data comprises at least one of text data or image data;
inputting the to-be-processed data into a trained target encoding network to obtain a target encoding result corresponding to the to-be-processed data, wherein the target encoding network is a network model trained according to any one of claims 1 to 7; and
determining a data processing result corresponding to the to-be-processed data based on the target encoding result.

9. The method according to claim 8, further comprising determining a target encoder configured to process the to-be-processed data in the target encoding network according to the following method:
determining a target data type of the to-be-processed data; and
using an encoder matching the target data type as the target encoder.

10. A network model training apparatus, comprising:
a first obtaining module, configured to obtain target sample data, wherein the target sample data comprises text sample data and image sample data;
a first inputting module, configured to input the target sample data into a to-be-trained network model to obtain a sample recognition result, wherein the network model comprises a text encoder, an image encoder, and a hybrid encoder, and the sample recognition result comprises a text recognition result determined based on the text encoder, an image recognition result determined based on the image encoder, and a text-image hybrid recognition result determined based on the hybrid encoder; and
an adjusting module, configured to adjust a parameter of the text encoder based on the text recognition result and first supervision data corresponding to the text recognition result, adjust a parameter of the image encoder based on the image recognition result and second supervision data corresponding to the image recognition result, the text-image hybrid recognition result, and third supervision data corresponding to the text-image hybrid recognition result, and adjust a parameter of the hybrid encoder based on the text-image hybrid recognition result and the third supervision data corresponding to the text-image hybrid recognition result, to obtain a trained network model comprising the text encoder, the image encoder, and the hybrid encoder.

11. A data processing apparatus, comprising:
a second obtaining module, configured to obtain to-be-processed data, wherein the to-be-processed data comprises at least one of text data or image data;
a second inputting module, configured to input the to-be-processed data into a trained target encoding network to obtain a target encoding result corresponding to the to-be-processed data, wherein the target encoding network is a network model trained according to any one of claims 1 to 7; and
a determination module, configured to determine a data processing result corresponding to the to-be-processed data based on the target encoding result.

12. A computer device, comprising: a processor, a memory, and a bus, wherein the memory stores a machine-readable instruction executable by the processor, when the computer device runs, the processor communicates with the memory through the bus, and the machine-readable instruction, when executed by the processor, causes the processor to perform the steps of the network model training method according to any one of claims 1 to 7; or perform the steps of the data processing method according to any one of claims 8 to 9.

13. A non-transitory computer-readable storage medium, storing a computer program thereon, the computer program, when executed by a processor, causes the processor to perform the steps of the network model training method according to any one of claims 1 to 7; or perform the steps of the data processing method according to any one of claims 8 to 9.

14. A computer program product, the computer program product, when executed by a processor, causes the processor to perform the steps of the network model training method according to any one of claims 1 to 7; or perform the steps of the data processing method according to any one of claims 8 to 9.
